# EUROPEAN PATENT SPECIFICATION

(11) **EP 2 288 979 B1**
(45) Date of publication and mention of the grant of the patent: **12.10.2016**
(21) Application number: 09732761.3
(22) Date of filing: 03.04.2009
(51) Int. Cl.: G06F 3/033, G06F 3/041

(54) **A USER INTERFACE**
BENUTZEROBERFLÄCHE
INTERFACE UTILISATEUR

(30) Priority: 14.04.2008 US 82888
(43) Date of publication of application: 02.03.2011
(73) Proprietor: Nokia Technologies Oy, 02610 Espoo (FI)
(72) Inventor: NURMI, Mikko, FI-33580 Tampere (FI); PIHLAJA, Pekka Juhana, FI-21510 Hevonpää (FI)
(74) Representative: Kolster Oy Ab
(86) International application number: PCT/FI2009/050253
(87) International publication number: WO 2009/127779

(56) References cited:
- EP-A1- 0 640 936
- EP-A2- 1 852 774
- CH-A5- 659 531
- GB-A- 2 321 707
- US-A- 5 241 308
- US-A1- 2002 175 836
- US-B1- 6 492 979

## Description

### Field of the invention

The invention relates to a user interface for controlling an electronic device. The invention further relates to a method and a computer program for controlling an electronic device. The invention further relates to an electronic device and to an interface module that can be used as a building block of an electronic device.

### Background

Electronic devices such as mobile communication terminals and palmtop computers are typically equipped with digital devices capable of supporting various services and application functions. As a consequence, designing user interfaces for electronic devices of the kind mentioned above presents unique challenges in view of limited size, a limited number of controls that can be accommodated on such devices, and a need for quick, simple, and intuitive device operation. Especially in conjunction with mobile devices, the challenge related to a user interface is exacerbated because such devices are designed to be small, lightweight and easily portable. Consequently, mobile devices typically have limited display screens, keypads, keyboards and/or other input and output devices. Due to the size of the input and output devices, it may be difficult for users to enter, retrieve and view information using mobile devices. Users may have difficulty in accessing desired information, a desired service, and/or a desired application function due to variety of information that may be contained in or accessed with the mobile device, as well as due to a growing number of services and applications functions such devices are capable of supporting. Due to a great number of services and application functions a user interface of an electronic device typically includes a hierarchical menu structure.

A typical user interface of an electronic device according to the prior art includes a hierarchical menu structure in which one or more menu layers are being directly accessible at a time. The user interface can comprise a touch sensitive display screen such that a user of the electronic device is enabled to accomplish control actions by touching icons, texts, or other symbols displayed on the touch sensitive display screen. Due to the limited size of the touch sensitive display screen all details of the menu structure cannot usually be displayed simultaneously. Therefore, the user has usually to perform many successive control actions in order to get to a desired menu item that can be e.g. a desired application function to be performed. Each control action may include pressing a relevant spot of the touch sensitive display screen and, after getting response to the pressing, releasing the above-mentioned spot of the touch sensitive display screen from pressure. The repetitive pressing and release actions make the use of the user interface physically tiring.

US5241308, GB2321707, CH659531 and US2002/175836 disclose solutions for determining coordinates of a touch on a touch screen.

### Summary

Various aspects of the invention are set out in the claims.

A user of the electronic device of the invention is enabled to control the electronic device by using different levels and directions of force and/or torque directed to the sensor surface. Therefore, the electronic device can be controlled with a smaller number of repetitive pressing and release actions.

In accordance with a first aspect of the invention a novel method that can be used for controlling the electronic device is provided. The method comprises:
- producing a location indicator that indicates a location of a spot of a sensor surface that is closest to an external object,
- producing a force indicator that indicates a temporal change of a first force component directed to the sensor surface and a temporal change of a second force component directed to the sensor surface, the first force component and the second force component being parallel with the sensor surface, and
- controlling an electronic device on the basis of the location indicator and the force indicator, wherein the force indicator is produced with a ring-sensor arranged to detect the first force component and the second force component, the ring-sensor being located around a rod attached to a sensor element comprising the sensor surface.

In accordance with a second aspect of the invention a novel electronic device is provided. The electronic device comprises: a sensor comprising a sensor surface producing a location indicator that indicates a location of a spot of the sensor surface that is closest to an external object, means for producing a force indicator that indicates a temporal change of a first force component of a force directed to the sensor surface and a temporal change of a second force component of a force directed to the sensor surface, the first force component and the second force component being parallel with the sensor surface, and means for controlling an electronic device on the basis of the location indicator and the force indicator, wherein the force indicator is produced with a ring-sensor arranged to detect the first force component and the second force component, the ring-sensor being located around a rod attached to a sensor element comprising the sensor surface.

The electronic device can be, for example, a mobile communication terminal, a palmtop computer, a portable play station, or a combination of them.

In accordance with a third aspect of the invention a novel computer program is provided. The computer program comprises computer executable instructions in accordance with claim 15.

A computer readable medium can be encoded with the above-mentioned computer executable instructions.

A number of embodiments of the invention are described in accompanied dependent claims.

Various exemplifying embodiments of the invention both as to constructions and to methods of operation, together with additional objects and advantages thereof, will be best understood from the following description of specific embodiments when read in connection with the accompanying drawings.

The exemplifying embodiments of the invention presented in this document are not to be interpreted to pose limitations to the applicability of the appended claims. The verb "to comprise" is used in this document as an open limitation that does not exclude the existence of also unrecited features.

### Brief description of the figures

The embodiments of the invention that are presented in the sense of examples and their advantages are explained in greater detail below with reference to the accompanying drawings, in which:
figures 1a - 1e illustrate operational principles of related user interfaces,
figures 1f - 1h illustrate operational principles of user interfaces according to embodiments of the invention,
figures 2a and 2b show a related electronic device comprising a user interface,
figures 3a and 3b show an electronic device according to an embodiment of the invention,
figure 4 shows an interface module according to an embodiment of the invention, and
figure 5 is a flow chart of a method according to an embodiment of the invention.

### Description of the embodiments

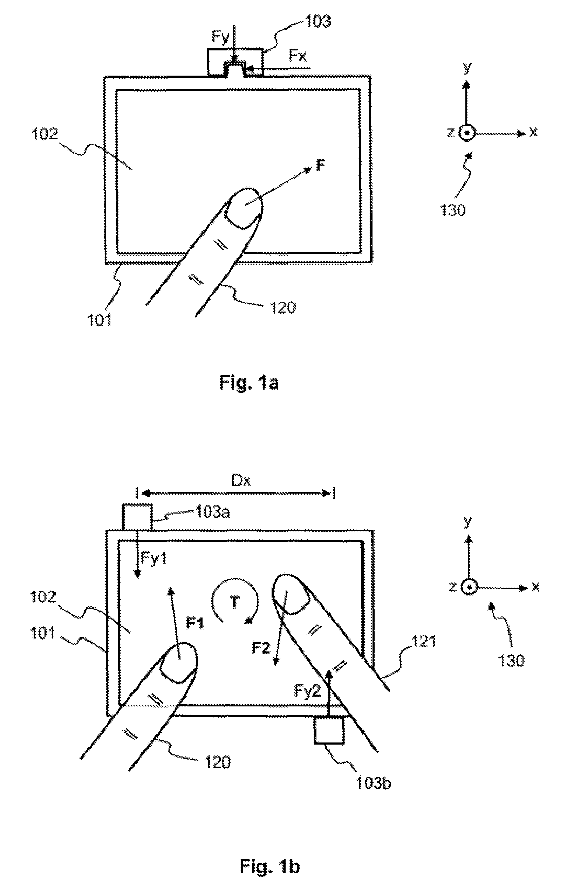

Figures 1a - 1e illustrate operational principles of related user interfaces. The user interfaces comprise a sensor element 101 that has a sensor surface 102. For the sake of clarity, figures 1a - 1e are simplified. For example, a processor unit for controlling an electronic device on the basis of the location indicator and the force indicator is not shown. A coordinate system 130 is shown for presentational purposes.

Figure 1a shows an exemplifying situation in which an external object 120 directs to the sensor surface 102 force **F** that has an x-component, a y-component, and a (minus) z-component. The x- and y-components of the force **F** are due to friction between the sensor surface and the external object. The external object can direct the force to the sensor surface when the external object is static with respect to the sensor surface and also when a contact point between the external object and the sensor surface is moving along the sensor surface. The external object can be a finger of a user of the user interface or the external object can be e.g. a stylus. In the exemplifying case shown in figure 1a, the force sensor equipment comprises a force detector 103 that is arranged to detect a first force component that is an x-directional force component Fx and to detect a second force component that is a y-directional force component Fy. The x-directional force component Fx is a counterforce of the x-component of the force **F** and the y-directional force component Fy is a counterforce of the y-component of the force **F.** An electronic device that is connected to the user interface can be controlled, for example, on the basis of location and/or movement of the external object 120 touching the sensor surface 102 and also on the basis of temporal changes of direction and/or strength of the resultant of Fx and Fy.

Figure 1b shows an exemplifying situation in which a first external object 120 directs to the sensor surface 102 first force **F**1 that has an x-component and a y-component and a second external object 121 directs to the sensor surface second force **F**2 that has an x-component and a y-component. The common effect of the first and the second forces **F**1 and **F**2 causes torque **T** directed to the sensor surface 102. In the exemplifying case shown in figure 1b, the force sensor equipment comprises a force detector 103a connected to a first point of the sensor element 101 and a force detector 103b connected to a second point of the sensor element. The force detector 103a is arranged to detect a first force component that is a y-directional force component Fy1. The force detector 103b is arranged to detect a second force component that is another y-directional force component Fy2. The force components Fy1 and Fy2 and a distance Dx shown in figure 1b indicate at least part of the torque **T** directed to the sensor surface. An electronic device that is connected to the user interface can be controlled, for example, on the basis of locations and/or movements of the external objects 120 and 121 touching the sensor surface 102 and also on the basis of temporal changes of the indicated torque.

In the example case illustrated in figure 1a, the first and the second force components directed to the sensor surface 102 are detected substantially at a same point of the sensor element 101 but detection directions of the first and the second force components are mutually different. In the example case illustrated in figure 1a, the detection directions of the first force component and the second force component are substantially perpendicular with respect to each other, i.e. the x-direction and the y-direction. It is, however, sufficient that the detection directions of the first force component and the second force component are mutually intersecting, i.e. they do not necessarily have to be perpendicular to each other. In the example case illustrated in figure 1b, both the first force component and the second force component are detected in the y-direction but the first force component and the second force component are detected at different points of the sensor element.

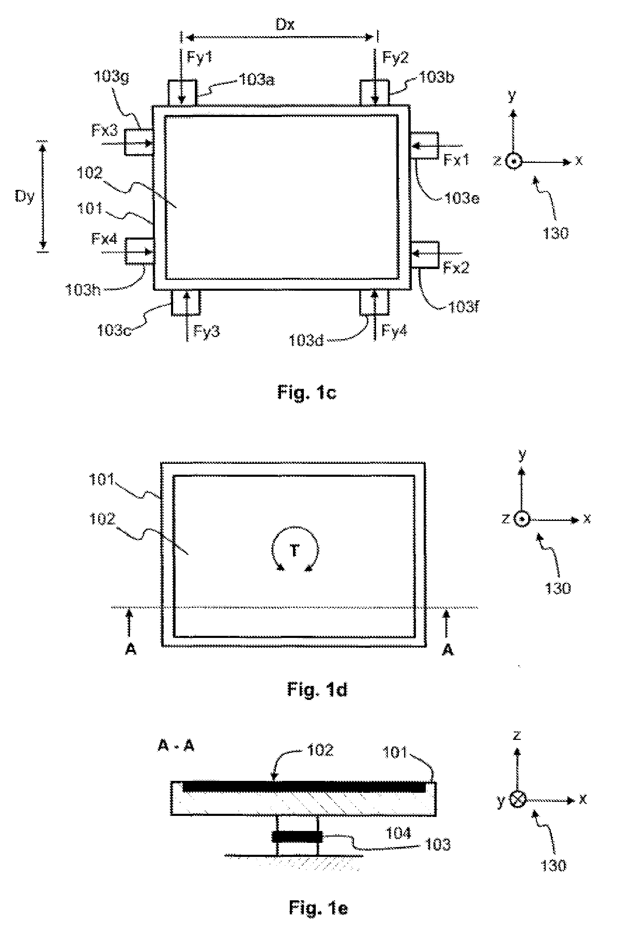

Figure 1c illustrates an example case in which the force sensor equipment comprises force detectors 103a-103d that are arranged to detect force components Fy1-Fy4, respectively, and force detectors 103e-103h that are arranged to detect force components Fx1-Fx4, respectively. The x-component of resultant force directed to the sensor surface 102 is Fx3 + Fx4 - Fx1 - Fx2, the y-component of the resultant force is Fy3 + Fy4 - Fy1 - Fy2, and torque directed to the sensor surface with respect to the geometrical middle point of the sensor surface is (Fy1 - Fy2 + Fy4 - Fy3) × Dx/2 + (Fx1 - Fx2 + Fx4 - Fx3) × Dy/2. The force sensor equipment can be provided also with a force detector that is arranged to detect the z-component of the resultant force in which case the resultant force can be detected in all three dimensions. An electronic device that is connected to the user interface can be controlled, for example, on the basis of location and/or movement of an external object touching the sensor surface, on the basis of temporal changes of the strength and/or the direction of the resultant force, and on the basis of temporal changes of the torque.

Figures 1a, 1b, and 1c present example cases in which the force sensor equipment comprises one or more force detectors that are connected to edges of the sensor element 101. Alternative realizations for the force sensor equipment are illustrated in figures 1d-1e.

Figure 1e shows a section taken through A-A of figure 1d.

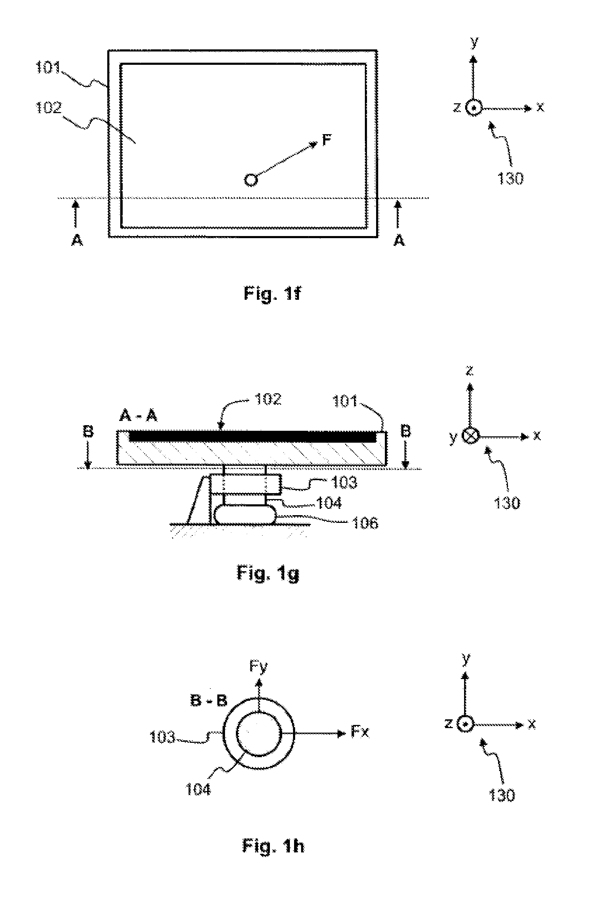

Figures 1d and 1e illustrate an example case in which the force sensor equipment comprises a torsional sensor 103 connected to the sensor element 101 and arranged to detect torque **T** caused by common effect of force components directed to the sensor surface 102. Figures 1f, 1g, and 1h illustrate an example case, according to embodiments of the invention, in which the force sensor equipment comprises a ring-sensor 103 arranged to detect first and second components Fx and Fy of force **F** directed to the sensor surface 102. The ring-sensor 103 is located around a rod 104 that is attached to the sensor element 101. The rod is supported with a flexible joint 106 to surrounding structures.

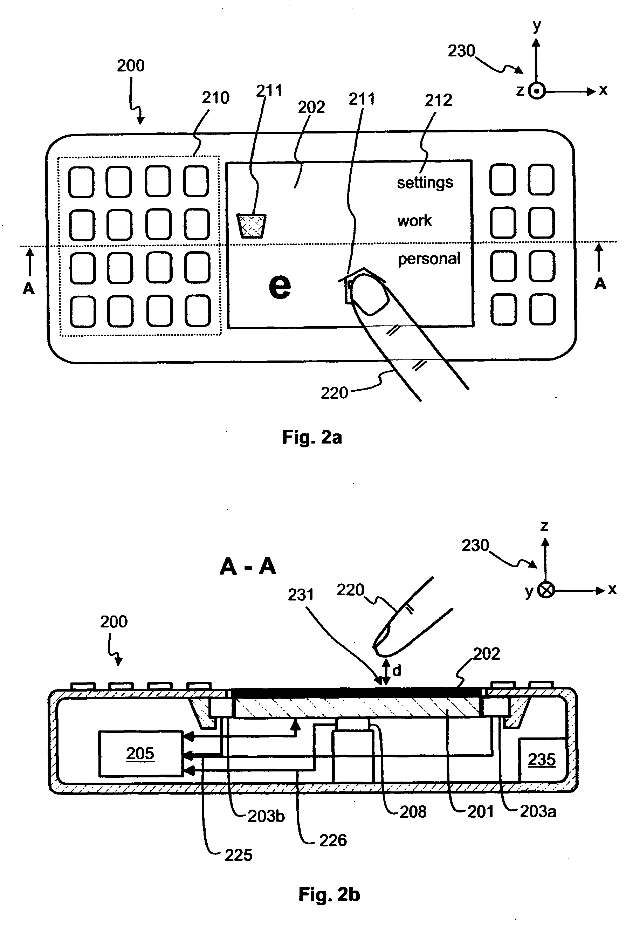

Figure 2a shows an electronic device 200 comprising a user interface.

Figure 2b shows the A-A section view of the electronic device. A coordinate system 230 is shown for presentational purposes. The user interface of the electronic device comprises a sensor element 201 that has a sensor surface 202. The sensor element is arranged to produce a location indicator that is adapted to indicate a location of a spot 231 of the sensor surface 202 that is closest to an external object 220. The location indicator is an output signal of the sensor element 201. The location indicator can express, for example, x- and y-coordinates of the spot 231. In the exemplifying situation shown in figures 2a and 2b the external object is a finger 220 of a user of the electronic device 200. It is also possible to use a sensor element that is capable of producing a location indicator adapted to indicate locations of two or more spots of the sensor surface which are simultaneously touched by (or sufficiently near to) two or more external objects. The user interface comprises force sensor equipment arranged to produce a force indicator 225 that is adapted to indicate a temporal change of a first force component directed to the sensor surface and a temporal change of a second force component directed to the sensor surface. The first force component can be e.g. an x-component of force directed to the sensor surface 202 and the second force component can be e.g. a y-component of the force directed to the sensor surface. The force sensor equipment comprises force detectors 203a and 203b that are arranged to detect forces in the x-direction. The force sensor equipment comprises also force detectors (not shown) that are arranged to detect forces in the y-direction. The force detectors can be, for example, according to what is depicted in figure 1c. Output signals of the force detectors constitute the force indicator 225. The user interface comprises a processor unit 205 that is arranged to control the electronic device on the basis of the location indicator and the force indicator. The user interface can comprise a vibration generator 235 responsive to the force indicator and/or to the location indicator. Mechanical vibration generated with the vibration generator can be used e.g. for indicating that the electronic device has received a control action from the user.

In the electronic device shown in figures 2a and 2b, the sensor surface 202 is also a display screen with the aid of which visual information can be shown. It is also possible that a display screen is only a part of the sensor surface 202 or the sensor surface 202 is only a part of a display screen. The user interface of the electronic device can comprise also a keyboard 210 and/or other means for exchanging information between the electronic device and the user.

In a user interface according to an embodiment of the invention, the sensor surface 202 is a touch sensitive sensor surface that is arranged to produce the location indicator as a response to a situation in which the external object 220 touches the sensor surface.

In a user interface according to an embodiment of the invention, the sensor surface 202 is a capacitive sensor surface that is arranged to produce the location indicator as a response to a situation in which the distance d between the sensor surface and the external object 220 is less than a pre-determined limit value.

In a user interface according to an embodiment of the invention, the sensor surface 202 is a combined touch sensitive and capacitive sensor surface. In other words, the sensor element 201 is capable of detecting a situation in which the external object does not touch the sensor surface but the distance d between the sensor surface and the external object is less than the pre-determined limit value and the sensor element is capable of distinguishing the above-described situation from a situation in which the external object touches the sensor surface.

In a user interface according to an embodiment of the invention, the processor unit 205 is capable of controlling the electronic device 200 to execute a pre-determined function as a response to a situation in which a pre-determined change is detected in at least one of the following: strength of the x-component of the force directed to the sensor surface and strength of the y-component of the force.

In a user interface according to an embodiment of the invention, the processor unit 205 is capable of controlling the electronic device to execute a pre-determined function as a response to a situation in which a pre-determined change is detected in direction of the resultant of the x-and y-components of the force directed to the sensor surface; e.g. when the resultant of the x-and y-components of the force is being rotated. It should be noted that the direction of the resultant can change irrespective whether or not strength (absolute value) of the resultant is changing.

In a user interface according to an embodiment of the invention, the processor unit 205 is capable of controlling the electronic device to execute a pre-determined function as a response to a situation in which a pre-determined change is detected in torque caused by combined effect of components of the force directed to the sensor surface.

In a user interface according to an embodiment of the invention, the force sensor equipment comprises a force detector 208 arranged to produce another force indicator 226 adapted to indicate a temporal change of a third force component directed to the sensor surface. The third force component is preferably the z-component of the force directed to the sensor surface. The processor unit is capable of controlling the electronic device on the basis of the location indicator, the force indicator (the x and y -directions), and the other force indicator (the z-direction). It is also possible to use a sensor element that is capable of producing a location indicator adapted to indicate locations of two or more spots of the sensor surface which are simultaneously touched by two or more external objects. In this case, the force indicator and the other force indicator indicate preferably x-, y- and z-components of a resultant of forces directed to the said two or more spots of the sensor surface.

In a user interface according to an embodiment of the invention, the processor unit 205 is capable of controlling the electronic device according to strength and direction of the resultant of the x-and y-components of the force directed to the sensor surface. Therefore, the sensor surface or a pre-determined area of the sensor surface can be used as a joystick. The force sensor equipment can be arranged to indicate also the z-component of the force directed to the sensor surface. In this case, the sensor surface or the pre-determined area of the sensor surface can be used as a three dimensional joystick (3D-joystick) for controlling the electronic device according to strength and direction of the resultant of the x-, y, and z-components of the force directed to the sensor surface.

In a user interface according to an embodiment of the invention, the sensor surface 202 is a capacitive sensor surface and the processor unit 205 is arranged to highlight a symbol displayed on the sensor surface as a response to a situation in which the distance d between the external object 220 and the symbol is less than a pre-determined limit value. The symbol can be, for example, an icon 211, a piece of text 212, or some other kind of piece of visual information shown on the sensor surface.

In a user interface according to an embodiment of the invention, the processor unit 205 is arranged to select the symbol 211 and to modify visual information displayed on the sensor surface 202 around the symbol as a response to a situation in which the external object 220 is touching the sensor surface in a location in which the symbol 211 is being displayed.

In a user interface according to an embodiment of the invention, the processor unit 205 is arranged to change the symbol 211 displayed on the sensor surface from a non-selected state to a selected-to-move state and to move a position of the symbol on the sensor surface 202 as a response to a situation in which the external object 220 is touching the sensor surface in a location in which the symbol is being displayed and the external object directs to the sensor surface force that has a component parallel with the sensor surface and strength of the said component exceeds a predetermined limit. The symbol is moved towards direction of the above-mentioned component of the force. After moving, the symbol can be returned back to the non-selected state as a response to e.g. a situation in which the sensor surface is no more touched.

In a user interface according to an embodiment of the invention, the processor unit 205 is capable of controlling the electronic device to change colors displayed on a display screen according (a) temporal change(s) in at least one of the following: a) direction of force directed to the sensor surface, b) torque caused by combined effect of components of the force directed to the sensor surface, and c) strength of the force directed to the sensor surface.

In a user interface according to an embodiment of the invention, the processor unit 205 is capable of controlling the electronic device to scroll items displayed on the display screen according to (a) temporal change(s) in at least one of the following: a) direction of force directed to the sensor surface, b) torque caused by combined effect of components of the force directed to the sensor surface, and c) strength of the force directed to the sensor surface. For example, scrolling direction (forward/backward) can depend on the direction of the force and scrolling speed can depend on the strength of the force.

In a user interface according to an embodiment of the invention, the processor unit 205 is capable of controlling the electronic device to zoom items displayed on the display screen according to (a) temporal change(s) in at least one of the following: a) direction of force directed to the sensor surface, b) torque caused by combined effect of components of the force directed to the sensor surface, and c) strength of the force directed to the sensor surface. For example, zooming direction (zoom in/zoom out) can depend on the direction of the force and zooming speed can depend on the strength of the force.

In a user interface according to an embodiment of the invention, the processor unit 205 is capable of controlling the electronic device to rotate items displayed on the display screen according to (a) temporal change(s) in at least one of the following: a) direction of force directed to the sensor surface, b) torque caused by combined effect of components of the force directed to the sensor surface, and c) strength of the force directed to the sensor surface. For example, direction of rotation (clockwise/counterclockwise) can depend on the direction of the force and speed of the rotation can depend on the strength of the force.

In a user interface according to an embodiment of the invention, the processor unit 205 is capable of controlling the electronic device to select an action directed to an item displayed on the display screen according to (a) temporal change(s) in at least one of the following: a) direction of force directed to the sensor surface, b) torque caused by combined effect of components of the force directed to the sensor surface, and c) strength of the force directed to the sensor surface. For example, a minimum strength of the force can be required in order to put the item to a wastebasket and items defined to be important may require stronger force than those items that have not been defined as important.

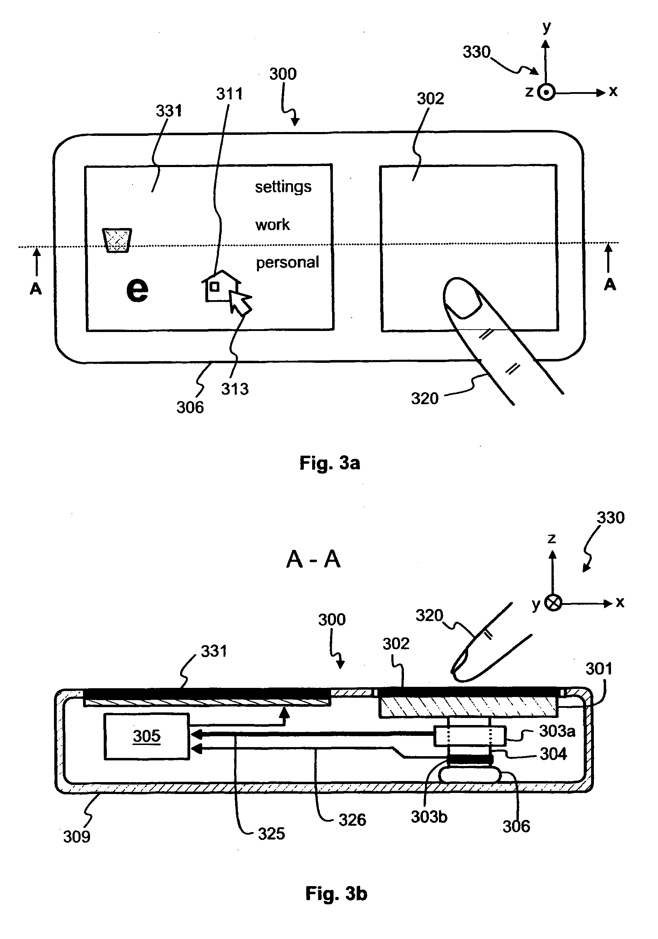

Figure 3a shows an electronic device 300 according to an embodiment of the invention. The electronic device can be, for example, a mobile communication terminal, a palmtop computer, a portable play station, or a combination of them. Figure 3b shows the A-A section view of the electronic device. A user interface of the electronic device comprises a sensor element 301 that has a sensor surface 302. A coordinate system 330 is shown for presentational purposes. The sensor element is arranged to produce a location indicator that is adapted to indicate a location of a spot of the sensor surface that is closest to an external object 320. The location indicator can express, for example, x- and y-coordinates of the spot closest to the external object. The sensor surface can be a touch sensitive sensor surface, a capacitive sensor surface, or a combined capacitive and touch sensitive sensor surface. The user interface comprises force sensor equipment arranged to produce a force indicator 325 that is adapted to indicate a temporal change of an x-component of force directed to the sensor surface and a temporal change of a y-component of the force directed to the sensor surface. The force sensor equipment comprises a ring-sensor 303a that is located around a rod 304 attached to the sensor element 301. The rod is supported with a flexible joint 306 to a casing 309 of the electronic device. The user interface comprises a processor unit 305 that is arranged to control the electronic device on the basis of the location indicator and the force indicator. The user interface comprises a display screen 331 with the aid of which visual information can be shown.

In an electronic device according to an embodiment of the invention, the force sensor equipment comprises a torsional sensor 303b arranged to detect torque caused by combined effect of the x-and y-components of the force directed to the sensor surface. The processor unit 305 is arranged to control the electronic device on the basis of the location indicator, the force indicator and the detected torque 326. The rod 304 can be (or include) a force detector arranged to detect the z-component of the force directed to the sensor surface in which case the processor unit 305 is preferably arranged to control the electronic device on the basis of also the detected z-component of the force.
In an electronic device according to an embodiment of the invention, the sensor surface 302 is a capacitive sensor surface and the processor unit 305 is arranged to move a cursor 313 on the display screen as a response to a situation in which a distance between the external object 320 and the sensor surface 302 is less than a pre-determined limit value and the external object is moved in the xy-plane. The cursor is moved on the display screen according to movements of the external object in the xy-plane. The processor unit 305 is arranged to highlight a symbol 311 displayed on the display screen as a response to e.g. a situation in which the external object 320 touches the sensor surface and the cursor 313 is pointing to the symbol. In other words, a symbol pointed to by the cursor can be selected for further actions by touching the sensor screen. The processor unit 305 is arranged to move the symbol 311 on the display screen as a response to e.g. a situation in which the external object touches the sensor surface, the cursor 313 is pointing to the symbol, and the external object directs to the sensor surface force that has a component parallel with the sensor surface and strength of the said component exceeds a pre-determined limit. The processor unit 305 is arranged to control the electronic device to execute a function related to the symbol 311 as a response to e.g. a situation in which a pre-determined change is detected in direction of the resultant of the x-and y-components of the force directed to the sensor surface and the cursor 213 is pointing to the symbol.

In an electronic device according to an embodiment of the invention, the sensor surface 302 is a touch sensitive sensor surface and the processor unit 305 is arranged to move the cursor 313 on the display screen as a response to a situation in which the external object 320 touches the sensor surface and the external object is moved on the sensor surface. The cursor is moved on the display screen according to movements of the external object on the sensor surface. The processor unit 305 is arranged to highlight a symbol 311 displayed on the display screen as a response to e.g. a situation in which the resultant of the x-and y-components of the force directed to the sensor surface is rotated clockwise and the cursor 213 is pointing to the symbol. In other words, a symbol pointed to by the cursor can be selected for further actions by rotating the resultant force clockwise. The processor unit 305 is arranged to move the symbol 311 on the display screen as a response to e.g. a situation in which the symbol has been highlighted, the cursor 313 is pointing to the symbol, and the external object is moved along the sensor surface. The processor unit 305 is arranged to control the electronic device to execute a function related to the symbol 311 as a response to e.g. a situation in which the symbol has been highlighted, the cursor 313 is pointing to the symbol, and the resultant of the x-and y-components of the force directed to the sensor surface is rotated counterclockwise.

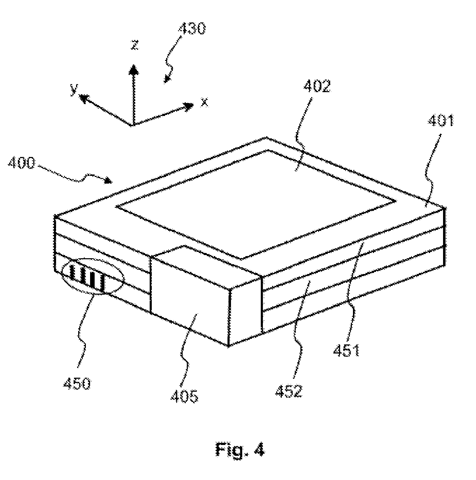

Figure 4 shows an interface module 400 according to an embodiment of the invention. The interface module can be used as a building block of an electronic device that can be e.g. a mobile phone. The interface module comprises a sensor element 401 that has a sensor surface 402. A coordinate system 430 is shown for presentational purposes. The sensor element is arranged to produce a location indicator that is adapted to indicate a location of a spot of the sensor surface that is closest to an external object. The interface module comprises force sensor equipment arranged to produce a force indicator that is adapted to indicate a temporal change of a first force component directed to the sensor surface and a temporal change of a second force component directed to the sensor surface, the first force component and the second force component being parallel with the sensor surface 402. The force sensor equipment comprises one or more force detectors that are located in layer 451 and/or in layer 452. The force detectors can be, for example, according to what is depicted in figures 1a - 1h. The interface module comprises a processor unit 405 that is capable of controlling an electronic device connected to the interface module on the basis of the location indicator and the force indicator. The interface module comprises connector pads 450 via which electrical signals can be conducted to/from the interface module.

In an interface module according to an embodiment of the invention, the force sensor equipment is arranged to produce another force indicator adapted to indicate a temporal change of a third force component directed to the sensor surface. The third force component is preferably the z-component of the force directed to the sensor surface. The processor unit is preferably arranged to control the electronic device on the basis of the location indicator, the force indicator (the x- and y- directions), and the other force indicator (the z-direction).

A user interface according to an embodiment of the invention comprises: (i) means for producing a location indicator that indicates a location of a spot of a sensor surface that is closest to an external object, (ii) means for producing a force indicator that indicates a temporal change of a first force component directed to the sensor surface and a temporal change of a second force component directed to the sensor surface, the first force component and the second force component being parallel with the sensor surface, and (iii) means for controlling an electronic device on the basis of the location indicator and the force indicator.

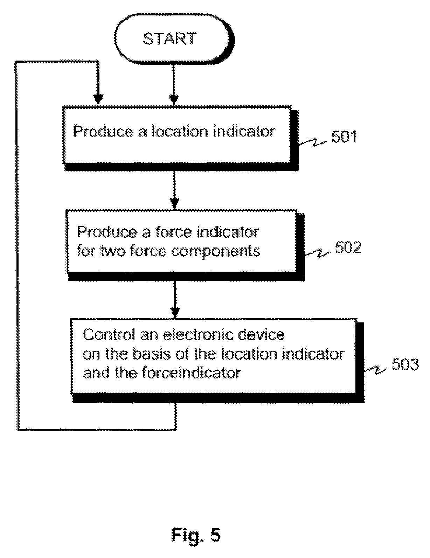

Figure 5 is a flow chart of a method according to an embodiment of the invention for controlling an electronic device. Phase 501 comprises producing a location indicator that indicates a location of a spot of a sensor surface that is closest to an external object. Phase 502 comprises producing a force indicator that indicates a temporal change of a first force component directed to the sensor surface and a temporal change of a second force component directed to the sensor surface, the first force component and the second force component being parallel with the sensor surface. Phase 503 comprises controlling the electronic device on the basis of the location indicator and the force indicator. The external object can be e.g. a finger of a user of the electronic device.
In a method according to an embodiment of the invention, the first force component and the second force component are detected in mutually intersecting directions.

In a method according to an embodiment of the invention, the first force component and the second force component are detected in directions substantially perpendicular with respect to each other.

In a method according to an embodiment of the invention, the location indicator indicates locations of two or more spots of the sensor surface which are simultaneously touched by two or more external objects.

In a method according to an embodiment of the invention, the first force component is detected at a first point of a sensor element that comprises the sensor surface and the second force component is detected at a second point of the sensor element.

In a method according to an embodiment of the invention, the electronic device is controlled to execute a pre-determined function as a response to a situation in which a predetermined change is detected in one of the following: strength of the first force component and strength of the second force component.

In a method according to an embodiment of the invention, the electronic device is controlled to execute a pre-determined function as a response to a situation in which a predetermined change is detected in a direction of a resultant of the first force component and the second force component; e.g. when the resultant is being rotated.

In a method according to an embodiment of the invention, the electronic device is controlled to execute a pre-determined function as a response to a situation in which a predetermined change is detected in torque directed to the sensor surface by combined effect of the first force component and the second force component.

A method according to an embodiment of the invention comprises producing another force indicator that indicates a temporal change of a third force component directed to the sensor surface, the third force component being substantially perpendicular to the sensor surface and the electronic device being controlled on the basis of the location indicator, the force indicator, and the other force indicator.

In a method according to an embodiment of the invention, the sensor surface is a touch sensitive sensor surface arranged to produce the location indicator as a response to a situation in which the external object is touching the sensor surface.

In a method according to an embodiment of the invention, the sensor surface is a capacitive sensor surface arranged to produce the location indicator as a response to a situation in which a distance between the sensor surface and the external object is less than a pre-determined limit value.
In a method according to an embodiment of the invention, the force indicator is produced with a ring-sensor arranged to detect the first force component and the second force component (e.g. figures If, 1g, and 1h), the ring-sensor being located around a rod attached to a sensor element comprising the sensor surface.

In a method according to an embodiment of the invention, at least a part of the sensor surface is capable of operating as a display screen and visual information is displayed on the sensor surface.

In a method according to an embodiment of the invention, colors displayed on a display screen are changed according (a) temporal change(s) in at least one of the following: a) direction of a resultant of the first, second, and third force components, b) torque caused by combined effect of the first and second force components, and c) strength of the resultant of the first, second, and third force components.

In a method according to an embodiment of the invention, items displayed on the display screen are scrolled according to (a) temporal change(s) in at least one of the following: a) direction of a resultant of the first, second, and third force components, b) torque caused by combined effect of the first and second force components, and c) strength of the resultant of the first, second, and third force components. For example, scrolling direction (forward/backward) can depend on the direction of the resultant and scrolling speed can depend on the strength of the resultant.

In a method according to an embodiment of the invention, items displayed on the display screen are zoomed according to (a) temporal change(s) in at least one of the following: a) direction of a resultant of the first, second, and third force components, b) torque caused by combined effect of the first and second force components, and c) strength of the resultant of the first, second, and third force components. For example, zooming direction (zoom in/zoom out) can depend on the direction of the resultant and zooming speed can depend on the strength of the resultant.

In a method according to an embodiment of the invention, items displayed on the display screen are rotated according to (a) temporal change(s) in at least one of the following: a) direction of a resultant of the first, second, and third force components, b) torque caused by combined effect of the first and second force components, and c) strength of the resultant of the first, second, and third force components. For example, direction of rotation (clockwise/counterclockwise) can depend on the direction of the resultant and speed of the rotation can depend on the strength of the resultant.

In a method according to an embodiment of the invention, an action directed to an item displayed on the display screen is selected according to (a) temporal change(s) in at least one of the following: a) direction of a resultant of the first, second, and third force components, b) torque caused by combined effect of the first and second force components, and c) strength of the resultant of the first, second, and third force components. For example, a minimum strength of the resultant can be required in order to put the item to a wastebasket and items defined to be important may require stronger resultant than those items that have not been defined as important.

A computer program according to an embodiment of the invention comprises computer executable instructions as claimed by claim 15.

The processor unit in which the computer program can be executed can be e.g. the processor unit 305 of the electronic device 300 shown in figure 3.
The computer executable instructions can be, for example, sub-routines and/or functions.

A computer program according to an embodiment of the invention comprises computer executable instructions for making the processor unit to control the electronic device also on the basis of another force indicator adapted to indicate a temporal change of a third force component directed to the sensor surface, the third force component being substantially perpendicular to the sensor surface.

A computer program according to an embodiment of the invention can be stored in a computer readable medium. The computer readable medium can be, for example, an optical compact disk or an electronic memory device like a RAM (random access memory) or a ROM (read only memory).

While there have been shown and described and pointed out fundamental novel features of the invention as applied to embodiments thereof, it will be understood that various omissions and substitutions and changes in the form and details of the devices and methods described may be made by those skilled in the art without departing from the scope of the inventive idea defined in the accompanied independent claims. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. The specific examples provided in the description given above should not be construed as limiting. Therefore, the invention is not limited merely to the embodiments described above, many variants being possible without departing from the scope of the inventive idea defined in the accompanied independent claims.

## Claims

1. A method for controlling an electronic device (300) comprising a user interface, said method comprising:
- producing, by a sensor comprising a sensor surface (302), a location indicator that indicates a location of a spot (231) of the sensor surface (302) that is closest to an external object (320),
- producing a force indicator (325) that indicates a temporal change of a first force component of a force directed to the sensor surface and a temporal change of a second force component of the force directed to the sensor surface, the first force component and the second force component being parallel with the sensor surface, and
- controlling an electronic device (300) on the basis of the location indicator and the force indicator (325),
**characterized in that** the force indicator is produced with a ring-sensor (303a) arranged to detect the first force component and the second force component, the ring-sensor being located around a rod (304) attached to a sensor element (301) comprising the sensor surface (302).

2. A method according to claim 1, wherein the first force component and the second force component are detected in mutually intersecting directions.

3. A method according to claim 2, wherein the first force component and the second force component are detected in directions substantially perpendicular with respect to each other.

4. A method according to claim 1, wherein the first force component is detected at a first point of a sensor element that comprises the sensor surface and the second force component is detected at a second point of the sensor element (301).

5. A method according to claim 1, wherein the electronic device (300) is controlled to execute a pre-determined function as a response to a situation in which a pre-determined change is detected in a direction of a resultant of the first force component and the second force component, or a situation in which a pre-determined change is detected in torque directed to the sensor surface (302) by combined effect of the first force component and the second force component, or a situation in which a pre-determined change is detected in one of the following: strength of the first force component and strength of the second force component.

6. A method according to claim 1, wherein the method comprises producing another force indicator that indicates a temporal change of a third force component directed to the sensor surface (302), the third force component being substantially perpendicular to the sensor surface (302) and the electronic device (300) being controlled on the basis of the location indicator, the force indicator (325), and the other force indicator.

7. A method according to claim 1, wherein the sensor surface (302) is a touch sensitive sensor surface arranged to produce the location indicator as a response to a situation in which the external object (320) is touching the sensor surface (302).

8. A method according to claim 1, wherein the sensor surface (302) is a capacitive sensor surface arranged to produce the location indicator as a response to a situation in which a distance between the sensor surface (302) and the external object (320) is less than a pre-determined limit value.

9. A method according to claim 1, wherein the force indicator (325) is produced with force detectors connected to edges of the sensor element and arranged to detect the first force component and the second force component.

10. A method according to claim 1, wherein the force indicator (325) is produced with a torsional sensor arranged to detect torque caused by common effect of the first force component and the second force component.

11. A method according to claim 1, wherein at least a part of the sensor surface (302) is capable of operating as a display screen and visual information is displayed on the sensor surface.

12. A method according to claim 6, wherein colors displayed on a display screen are changed, items displayed on the display screen are scrolled, items displayed on the display screen are zoomed, items displayed on the display screen are rotated, or an action directed to an item displayed on the display screen is selected according (a) temporal change(s) in at least one of the following: a) direction of a resultant of the first, second, and third force components, b) torque caused by combined effect of the first and second force components, and c) strength of the resultant of the first, second, and third force components.

13. An electronic device (300) comprising
a user interface,
a sensor comprising a sensor surface (302) producing a location indicator that indicates a location of a spot (231) of the sensor surface (302) that is closest to an external object (320),
means for producing a force indicator (325) that indicates a temporal change of a first force component of a force directed to the sensor surface and a temporal change of a second force component of a force directed to the sensor surface, the first force component and the second force component being parallel with the sensor surface, and
means (305) for controlling an electronic device (300) on the basis of the location indicator and the force indicator (325),
**characterized in that** the force indicator is produced with a ring-sensor (303a) arranged to detect the first force component and the second force component, the ring-sensor being located around a rod (304) attached to a sensor element (301) comprising the sensor surface (302).

14. An electronic device according to claim 13, wherein the electronic device is at least one of the following: a mobile communication terminal, a palmtop computer, and a portable play station.

15. A computer program comprising computer executable instructions, which, when executed by a processor unit to control an electronic device (300) comprising a user interface, perform the method steps comprised by any one of the methods claimed by claims 1 - 12.

## Patentansprüche

1. Verfahren zum Steuern einer elektronischen Vorrichtung (300), die eine Benutzeroberfläche aufweist, wobei das Verfahren aufweist:
- Erzeugen, durch einen Sensor, der eine Sensoroberfläche (302) aufweist, eines Positionsindikators, der eine Position eines Punkts (231) der Sensoroberfläche (302) angibt, der einem äußeren Objekt (320) am nächsten ist,
- Erzeugen eines Kraftindikators (325), der eine zeitliche Änderung einer ersten Kraftkomponente einer Kraft, die auf die Sensoroberfläche gerichtet ist, und eine zeitliche Änderung einer zweiten Kraftkomponente der Kraft, die auf die Sensoroberfläche gerichtet ist, angibt, wobei die erste Kraftkomponente und die zweite Kraftkomponente parallel zur Sensoroberfläche sind, und
- Steuern einer elektronischen Vorrichtung (300) auf der Basis des Positionsindikators und des Kraftindikators (325),
**dadurch gekennzeichnet, dass** der Kraftindikator mit einem Ringsensor (303a) erzeugt wird, der zum Erfassen der ersten Kraftkomponente und der zweiten Kraftkomponente angeordnet ist, wobei der Ringsensor um eine Stange (304) positioniert ist, die an einem Sensorelement (301) befestigt ist, das die Sensoroberfläche (302) aufweist.

2. Verfahren nach Anspruch 1, wobei die erste Kraftkomponente und die zweite Kraftkomponente in wechselseitig schneidenden Richtungen erfasst werden.

3. Verfahren nach Anspruch 2, wobei die erste Kraftkomponente und die zweite Kraftkomponente in Richtungen erfasst werden, die im Wesentlichen senkrecht in Bezug zueinander sind.

4. Verfahren nach Anspruch 1, wobei die erste Kraftkomponente an einem ersten Punkt eines Sensorelements erfasst wird, das die Sensoroberfläche aufweist, und die zweite Kraftkomponente an einem zweiten Punkt des Sensorelements (301) erfasst wird.

5. Verfahren nach Anspruch 1, wobei die elektronische Vorrichtung (300) gesteuert wird, um eine vorgegebene Funktion auszuführen als Reaktion auf eine Situation, in welcher eine vorgegebene Änderung in einer Richtung einer Resultierenden der ersten Kraftkomponente und der zweiten Kraftkomponente erfasst wird, oder eine Situation, in welcher eine vorgegebene Änderung in einem Drehmoment erfasst wird, das auf die Sensoroberfläche (302) durch kombinierte Wirkung der ersten Kraftkomponente und der zweiten Kraftkomponente gerichtet ist, oder eine Situation, in welcher eine vorgegebene Änderung in einer der Folgenden erfasst wird: Stärke der ersten Kraftkomponente und Stärke der zweiten Kraftkomponente.

6. Verfahren nach Anspruch 1, wobei das Verfahren ein Erzeugen eines anderen Kraftindikators aufweist, der eine zeitliche Änderung einer dritten Kraftkomponente angibt, die auf die Sensoroberfläche (302) gerichtet ist, wobei die dritte Kraftkomponente im Wesentlichen senkrecht zur Sensoroberfläche (302) liegt und die elektronische Vorrichtung (300) auf der Basis des Positionsindikators, des Kraftindikators (325) und des anderen Kraftindikators gesteuert wird.

7. Verfahren nach Anspruch 1, wobei die Sensoroberfläche (302) eine berührungsempfindliche Sensoroberfläche ist, die zum Erzeugen des Positionsindikators als Reaktion auf eine Situation angeordnet ist, in welcher das äußere Objekt (320) die Sensoroberfläche (302) berührt.

8. Verfahren nach Anspruch 1, wobei die Sensoroberfläche (302) eine kapazitive Sensoroberfläche ist, die zum Erzeugen des Positionsindikators als Reaktion auf eine Situation angeordnet ist, in welcher ein Abstand zwischen der Sensoroberfläche (302) und dem äußeren Objekt (320) kleiner als ein vorgegebener Grenzwert ist.

9. Verfahren nach Anspruch 1, wobei der Kraftindikator (325) mit Kraftdetektoren erzeugt wird, die mit Rändern des Sensorelements verbunden und angeordnet sind, die erste Kraftkomponente und die zweite Kraftkomponente zu erfassen.

10. Verfahren nach Anspruch 1, wobei der Kraftindikator (325) mit einem Drehmomentsensor erzeugt wird, der zum Erfassen eines Drehmoments angeordnet ist, das durch eine gemeinsame Wirkung der ersten Kraftkomponente und der zweiten Kraftkomponente erzeugt wird.

11. Verfahren nach Anspruch 1, wobei zumindest ein Teil der Sensoroberfläche (302) imstande ist, als Anzeigeschirm zu arbeiten, und visuelle Informationen auf der Sensoroberfläche angezeigt werden.

12. Verfahren nach Anspruch 6, wobei Farben, die auf einem Anzeigeschirm angezeigt werden, geändert werden, Gegenstände, die auf dem Anzeigeschirm angezeigt werden, gescrollt werden, Gegenstände, die auf dem Anzeigeschirm angezeigt werden, gezoomt werden, Gegenstände, die auf dem Anzeigeschirm angezeigt werden, gedreht werden oder eine Aktion, die auf einen Gegenstand gerichtet ist, der auf dem Anzeigeschirm angezeigt wird, gemäß (a) (einer) zeitlichen Änderung(en) in zumindest einer der Folgenden ausgewählt wird: a) Richtung der Resultierenden der ersten, zweiten und dritten Kraftkomponente, b) Drehmoment, das durch eine kombinierte Wirkung der ersten und zweiten Kraftkomponente verursacht wird, und c) Stärke der Resultierenden der ersten, zweiten und dritten Kraftkomponente.

13. Elektronische Vorrichtung (300), aufweisend
eine Benutzeroberfläche,
einen Sensor, der eine Sensoroberfläche (302) aufweist, der einen Positionsindikator erzeugt, der eine Position eines Punkts (231) der Sensoroberfläche (302) angibt, der einem äußeren Objekt (320) am nächsten ist,
Mittel zum Erzeugen eines Kraftindikators (325), der eine zeitliche Änderung einer ersten Kraftkomponente einer Kraft, die auf die Sensoroberfläche gerichtet ist, und eine zeitliche Änderung einer zweiten Kraftkomponente einer Kraft, die auf die Sensoroberfläche gerichtet ist, angibt, wobei die erste Kraftkomponente und die zweite Kraftkomponente parallel zur Sensoroberfläche sind, und
Mittel (305) zum Steuern einer elektronischen Vorrichtung (300) auf der Basis des Positionsindikators und des Kraftindikators (325),
**dadurch gekennzeichnet, dass** der Kraftindikator mit einem Ringsensor (303a) erzeugt wird, der zum Erfassen der ersten Kraftkomponente und der zweiten Kraftkomponente angeordnet ist, wobei der Ringsensor um eine Stange (304) positioniert ist, die an einem Sensorelement (301) befestigt ist, das die Sensoroberfläche (302) aufweist.

14. Elektronische Vorrichtung nach Anspruch 13, wobei die elektronische Vorrichtung zumindest eines der Folgenden ist: ein Mobilkommunikationsgerät, ein Palmtop-Rechner und eine tragbare Spielstation.

15. Computerprogramm, aufweisend durch einen Rechner ausführbare Anweisungen, die, wenn sie durch eine Prozessoreinheit zur Steuerung einer elektronischen Vorrichtung (300), die eine Benutzeroberfläche aufweist, ausgeführt werden, die Verfahrensschritte durchführen, die in einem der Verfahren nach Ansprüchen 1 bis 12 enthalten sind.

## Revendications

1. Procédé pour contrôler un dispositif électronique (300) comprenant une interface utilisateur, ledit procédé comprenant les étapes suivantes :
produire, par un détecteur comprenant une surface de détecteur (302), un indicateur d'emplacement qui indique un emplacement d'un point (231) de la surface de détecteur (302) qui est le plus proche d'un objet externe (320),
produire un indicateur de force (325) qui indique un changement temporel d'une première composante de force d'une force dirigée vers la surface de détecteur et un changement temporel d'une deuxième composante de force de la force dirigée vers la surface de détecteur, la première composante de force et la deuxième composante de force étant parallèles à la surface de détecteur, et
contrôler un dispositif électronique (300) sur la base de l'indicateur d'emplacement et de l'indicateur de force (325),
**caractérisé en ce que** l'indicateur de force est produit avec un détecteur annulaire (303a) agencé pour détecter la première composante de force et la deuxième composante de force, le détecteur annulaire étant situé autour d'une tige (304) fixée à un élément de détecteur (301) comprenant la surface de détecteur (302).

2. Procédé selon la revendication 1, dans lequel la première composante de force et la deuxième composante de force sont détectées dans des directions se croisant mutuellement.

3. Procédé selon la revendication 2, dans lequel la première composante de force et la deuxième composante de force sont détectées dans des directions sensiblement perpendiculaires l'une par rapport à l'autre.

4. Procédé selon la revendication 1, dans lequel la première composante de force est détectée au niveau d'un premier point d'un élément de détecteur qui comprend la surface de détecteur et la deuxième composante de force est détectée au niveau d'un second point de l'élément de détecteur (301).

5. Procédé selon la revendication 1, dans lequel le dispositif électronique (300) est contrôlé pour exécuter une fonction prédéterminée en réponse à une situation dans laquelle un changement prédéterminé est détecté dans une direction d'une résultante de la première composante de force et de la deuxième composante de force, ou à une situation dans laquelle un changement prédéterminé est détecté dans le couple dirigé vers la surface de détecteur (302) par l'effet combiné de la première composante de force et de la deuxième composante de force ou à une situation, dans laquelle un changement prédéterminé est détecté dans au moins un des paramètres suivants: l'intensité de la première composante de force et l'intensité de la deuxième composante de force.

6. Procédé selon la revendication 1, dans lequel le procédé comprend de produire un autre indicateur de force qui indique un changement temporel d'une troisième composante de force dirigée vers la surface de détecteur (302), la troisième composante de force étant sensiblement perpendiculaire à la surface de détecteur (302) et le dispositif électronique (300) étant contrôlé sur la base de l'indicateur d'emplacement, de l'indicateur de force (325) et de l'autre indicateur de force.

7. Procédé selon la revendication 1, dans lequel la surface de détecteur (302) est une surface de détecteur tactile agencée pour produire l'indicateur d'emplacement comme réponse à une situation dans laquelle l'objet externe (320) touche la surface de détecteur (302).

8. Procédé selon la revendication 1, dans lequel la surface de détecteur (302) est une surface de détecteur capacitive agencée pour produire l'indicateur d'emplacement comme réponse à une situation dans laquelle une distance entre la surface de détecteur (302) et l'objet externe (320) est inférieure à une valeur limite prédéterminée.

9. Procédé selon la revendication 1, dans lequel l'indicateur de force (325) est produit avec des détecteurs de force connectés à des bords de l'élément de détecteur et agencés pour détecter la première composante de force et la deuxième composante de force.

10. Procédé selon la revendication 1, dans lequel l'indicateur de force (325) est produit avec un détecteur de torsion agencé pour détecter la torsion causée par un effet commun de la première composante de force et de la deuxième composante de force.

11. Procédé selon la revendication 1, dans lequel au moins une partie de la surface de détecteur (302) est capable de fonctionner comme écran d'affichage, et des informations visuelles sont affichées sur la surface de capteur.

12. Procédé selon la revendication 6, dans lequel des couleurs affichées sur un écran d'affichage sont changées, des éléments affichés sur l'écran d'affichage sont faits défiler, des éléments affichés sur l'écran d'affichage sont agrandis, des éléments affichés sur l'écran d'affichage sont tournés, ou une action dirigée sur un élément affiché sur l'écran d'affichage est sélectionnée conformément à un/des changements temporels survenus au niveau d'au moins un des paramètres suivants : a) la direction d'une résultante des première, deuxième et troisième composantes de force, b) le couple causé par un effet combiné des première et deuxième composantes de force, et c) l'intensité de la résultante des première, deuxième et troisième composantes de force.

13. Dispositif électronique (300) comprenant une interface utilisateur,
un détecteur comprenant une surface de détecteur (302) produisant un indicateur d'emplacement qui indique un emplacement d'un point (231) de la surface de détecteur (302) qui est le plus proche d'un objet externe (320), un moyen pour produire un indicateur de force (325) qui indique un changement temporel d'une première composante de force d'une force dirigée vers la surface de détecteur et un changement temporel d'une deuxième composante de force d'une force dirigée vers la surface de détecteur, la première composante de force et la deuxième composante de force étant parallèles à la surface de détecteur, et
un moyen (305) pour contrôler un dispositif électronique (300) sur la base de l'indicateur d'emplacement et de l'indicateur de force (325), **caractérisé en ce que** l'indicateur de force est produit avec un détecteur annulaire (303a) agencé pour détecter la première composante de force et la deuxième composante de force, le détecteur annulaire étant situé autour d'une tige (304) fixée à un élément de détecteur (301) comprenant la surface de détecteur (302).

14. Dispositif électronique selon la revendication 13, dans lequel le dispositif électronique est au moins un dispositif parmi les suivants : un terminal de communication mobile, un ordinateur de poche et une console de jeu portable.

15. Programme informatique comprenant des instructions exécutables par ordinateur qui, lorsqu'elles sont exécutées par une unité de processeur pour contrôler un dispositif électronique (300) comprenant une interface utilisateur exécutent les étapes de procédé contenues dans l'un quelconque des procédés revendiqués dans les revendications 1 à 12.
